# EUROPEAN PATENT APPLICATION

(11) **EP 4 393 620 A1**
(43) Date of publication of application: **03.07.2024**
(21) Application number: 22217209.0
(22) Date of filing: 29.12.2022
(51) Int. Cl.: B23B 27/16

(54) **TURNING INSERT**

(71) Applicant: WALTER AG, 72072 Tübingen (DE)
(72) Inventor: Junger, Steffen, 720 72 Tübingen (DE)
(74) Representative: Sandvik

(57) **Abstract**

The present invention relates to a double sided, negative turning insert for metal cutting, which comprises a body a body comprising a top surface (1) comprising a main top support surface (14), a bottom surface (2) comprising a main bottom support surface (15), a peripheral side surface (3) connecting the top surface (1) and the bottom surface (2), and a central plane between the top surface and the bottom surface. The peripheral side surface comprises in total three corner side surfaces (4), which, as seen in a top view, each are arranged in one respective corner of an imaginary triangle (10) having three sides. The peripheral side surface comprises in total three main side surfaces (5), each extending from a respective associated first to a respective associated second of the corner side surfaces (4) along a respective associated one of the three sides of the imaginary triangle (10). At least one of the three main side surfaces (5) comprises primary support surfaces (13). The at least one main side surface (5) further comprises in total one pair of secondary support surfaces (21) facing toward opposite directions, wherein each of the secondary support surfaces (21) extend inward relative a respective one of the primary support surfaces (13), and wherein each of the secondary support surfaces (21) extend perpendicular to the central plane.

## Description

### Technical field

The present invention relates to a double sided, negative turning insert, turning tool body for holding such a turning insert and to a turning tool comprising such a tuning insert.

### Background

EP 3 153 260 B1 discloses a double sided, negative turning insert having a basic triangular shape. The turning insert comprises two opposed roughly triangular main surfaces and three side surfaces connecting the two main surfaces at each triangular side. The turning insert has nose portions including a cutting edge at each triangular corner of the both main surfaces. Support surfaces are provided in the main surfaces and an in the side surfaces that cooperate with support surfaces in an insert seat of turning tool body to securely fix the cutting insert therein.

The known turning insert functions well in many applications. However, in some applications, the turning insert may displace in the insert seat.

### Summary

It is an object of the present invention to further improve the known turning insert with features that enables more accurate and secure clamping thereof in an insert seat. It is also an object of the present invention to provide a turning tool comprising such a turning insert. This object is achieved according to the invention by means of a turning tool as defined in claim 1.

An inventive double sided, negative turning insert for metal cutting comprises
- a top surface comprising a main top support surface,
- a bottom surface comprising a main bottom support surface,
- a peripheral side surface connecting the top surface and the bottom surface,
- cutting edges, which are formed at the intersection between the top surface and the side surface, and between the bottom surface and the side surface, and
- a central plane between the top surface and the bottom surface
wherein
- the peripheral side surface comprises in total three corner side surfaces, which, as seen in a top view, each are arranged in one respective corner of an imaginary triangle having three sides,
- the peripheral side surface comprises in total three main side surfaces, each extending from a respective associated first to a respective associated second of the corner side surfaces along a respective associated one of the three sides of the imaginary triangle,
- at least one of the three main side surfaces comprises primary support surfaces, and wherein
- the at least one main side surface further comprises in total one pair of secondary support surfaces facing in opposite directions, wherein each of the secondary support surfaces extend inward relative a respective one of the primary support surfaces, and wherein each of the secondary support surfaces extend perpendicular to the central plane.

According to a second aspect of the present invention, a turning tool body according to claim 14, and according to a third aspect of the invention, a turning tool according to claim 15 are provided.

Thus, the inventive turning insert comprises, in addition to main support surface at the top surface/bottom surface and primary support surfaces in at least one of the three main side surfaces, one pair of secondary support surfaces. Due to the secondary support surfaces extending inward relative a respective one of the primary support surfaces, their extension differ from the extension of the respective primary support surface. Thus, when the turning insert is mounted in a insert seat, which is provided with complementary secondary support surfaces, the secondary support surfaces function to support the turning insert in additional directions. Thanks to that there is in total one pair of secondary support surfaces, problems relating to overdetermination can be reduced or even avoided. Thereby, accurate and secure clamping of the inventive turning insert is improved as compared to the prior art turning insert so that it is less prone to displace in the insert seat.

The present invention relates to a double sided, negative turning insert. The turning insert is suitable for cutting metal workpieces, preferably by chip removing machining. Specifically, the turning insert is suitable for machining metal workpieces by turning operations. The turning insert is configured to be releasably mounted in a turning tool body for together therewith form a turning tool. In turning, typically, the work piece is rotated and the cutting insert is moved toward the workpiece perpendicular to the axis of rotation in order to cut chips from a surface of the rotating workpiece. The surface may be an outer surface, or internal surface of the workpiece, for example the surface of an axially extending bore. In some operations, the turning tool is operated to in addition move also along other axes, such as for example along the rotation axis of the work piece.

The turning insert preferably comprises a wear resistant material such as cemented carbide, cermet, cubic Boron Nitride (CBN), or polycrystalline diamond (PCD) and may have a suitable coating.

The turning insert comprises a body, which has a top surface a bottom surface and a peripheral side surface connecting the top surface and the bottom surface. The turning insert comprises a central plane between the top surface and the bottom surface. The central plane typically extends half way between the top surface and the bottom surface.

Preferably, the top surface and the bottom surface have a basic triangular shape, wherein, for example, the corners are rounded or sharp, the sides extend inwards or outwards towards a center between the corners or connects in a straight or substantially straight line. Optionally, the sides are straight and linear, convexly or concavely curved, or comprise alternating portions thereof. The side surface, as seen in cross sections parallel to the central plane, optionally has a corresponding shape in some of the cross sections.

A top view is a view toward the turning insert in a direction normal to the central plane and a bottom view is a view toward the turning insert in a direction normal to the central plane.

Cutting edges are formed at the intersection between the top surface and the side surface, and between the bottom surface and the side surface. Optionally, cutting edges are located at the corners, and/or along the sides. Preferably, a corner cutting edge extends around the corner and is preferably symmetrical over a bisector. The bisector typically intersects a point on the corner cutting edge that is most distal from a central point of the turning insert. This allows the turning insert to be fed in both directions across the bisector. The corner cutting edges optionally are convexly rounded, or include one or several straight or curved portions that meet at a tip portion with a radius.

Cutting edges are formed both at the top surface and the bottom surface so that the turning insert is double sided. The term "double sided insert" is to be understood as describing an insert that can be turned so that the top surface assumes the place of the bottom surface, and vice versa, wherein either a cutting edge at the top surface or a cutting edge at the bottom surface is presented. Thus, the turning insert has at least two index positions. According to an embodiment, cutting edges are provided at all three corners of the top surface and at all three corners of the bottom surface, so that the turning insert is six times indexable.

The turning insert is negative. The term "negative insert" is to be understood as describing an insert wherein clearance surfaces extend perpendicular to the central plane. Preferably, at least portions of the side surface that are closest to the cutting edges form the clearance surfaces of the turning insert. According to embodiments, a major portion of or the entire side surface extend perpendicular to the central plane.

Preferably, both the top surface and the bottom surface include portions closest to the cutting edges that form rake surfaces. Optionally, the top surface or the bottom surface include chip breakers, for example in form of protrusions or recesses.

The top surface comprises a main top support surface and the bottom surface comprises a main bottom support surface. These surfaces are configured to cooperate with corresponding surfaces in an insert seat to provide at least a major portion of the support in a direction normal to the central plane. Preferably, the main top and the main bottom support surfaces are parallel with the central plane. Depending on the index position the cutting insert, one of the main top support surface and the main bottom support surface cooperate with a main seat support surface in an insert seat and the other one of the main top support surface and the main bottom support surface cooperate with a clamping mechanism.

The main support surfaces may each comprise separate part-surfaces or each form a continuous surface. According to embodiments, the main support surfaces, or part-surfaces thereof, are planar, extend in parallel with or at an angle relative the central plane, or form convex or concave surfaces. Preferably, both main support surfaces are planar and parallel to the central plane, form a continuous surface covering a major portion of the top surface and bottom surface, respectively. Preferably, the main support surfaces are different from the rake surfaces so that the support surfaces are less likely to be subjected to wear from cut chips. Support surface with large area are beneficial with respect to how much area is available for cooperation with a corresponding support surface in an insert seat or clamping mechanism. Planar surfaces are less complex to produce within desired tolerances.

Optionally, the clamping mechanism is a clamping screw, a clamp, a resilient member of the turning tool body, or any other suitable mechanism. In embodiments, the turning insert has a central, through hole for the clamping screw.

The peripheral side surface comprises in total three corner side surfaces. In other words, the peripheral side surfaces comprises no more and no less than the three corner side surfaces. As seen in a top view, or, in cross sections parallel to the central plane, the corner side surfaces optionally form convexly rounded surfaces, or include one or several planar or curved surfaces that meet in an area with a radius. According to an embodiment, as seen in cross sections parallel to the central plane, the corner side surfaces have the same shape as the corner cutting edges.

As seen in a top view, or, in cross sections parallel to the central plane, each of the in total three corner side surfaces are arranged in one respective corner of an imaginary triangle having three sides. The corner of the imaginary triangle should be arranged in corresponding points of the side corner surfaces. According to an embodiment with corner cutting edges in all three corners of both the top surface and the bottom surface, wherein each corner cutting edges is symmetrical over a bisector, the corners of the imaginary triangle are located on corresponding positions on one respective bisector each. Preferably, the imaginary triangle is equilateral. Thereby, it is possible to provide the turning insert with symmetry, for example 120° symmetry for both when the bottom surface faces in a first direction and when the top surfaces faces in the same, first direction.

The peripheral side surface comprises in total three main side surfaces. In other words, the peripheral side surfaces comprises no more and no less than the three main side surfaces. Each of the main side surfaces extend from a respective associated first to a respective associated second of the corner side surfaces along a respective associated one of the three sides of the imaginary triangle. The main side surface extends along the associated side of the imaginary triangle by optionally being aligned therewith, or by having a main extension in the direction of the associated side while deviating therefrom inwards and/or outwards.

The at least one main side surface further comprises in total one pair of secondary support surfaces facing toward opposite directions. Thereby, one of the secondary support surfaces will be available regardless if a cutting edge at the top surface or a cutting edge at the bottom surface is active.

At least one of the three main side surfaces comprises primary support surfaces.

Each of the secondary support surfaces extend inward relative a respective one of the primary support surfaces. In contrast, support surfaces of prior art turning inserts that are located on protrusions, such as form example teeth, may lack in strength and break. Inward extending surfaces are also beneficial with respect to production methods involving pressing.

A direction in the central plane which direction is perpendicular to the associated side of the imaginary triangle defines a depth direction. Preferably, the secondary support surfaces extend inward from the at least one main side surface a distance in the depth direction of 1 - 10%, preferably of 5% of the diameter of an inscribed circle. The inscribed circle is the largest circle that, as seen in a top view, can be contained within the side surface. A large extension in the depth direction is beneficial for achieving a large area.

Each of the secondary support surfaces extend perpendicular to the central plane. Thereby, the secondary support surfaces both extend in the same perpendicular direction in the two index positions of the turning insert, wherein in which two index positions either a cutting edge at the top surface or a cutting edge at the bottom surface is active.

Preferably, each of the secondary support surfaces of the pair is planar. Planar surfaces are favorable with respect to production methods such as production methods involving pressing.

The secondary support surfaces face toward opposite directions. For example, the each of the secondary support surfaces of the pair faces in a direction toward one another or away from one another. Preferably, as seen in a normal direction toward the central plane, each of the secondary support surfaces form an angle with the associated side of the imaginary triangle of 45 - 90°, preferably of 90°. Optionally, the secondary support surfaces of the pair face in opposite direction, for example in opposite direction along the associated side of the imaginary triangle. Secondary support surfaces that face toward each other at an angle of 90° are beneficial with respect to production methods involving pressing.

According to an embodiment, the secondary support surfaces of the pair each form a respective end wall of a recess, wherein the end walls are arranged in a common, single recess, or in one respective recess. Preferably, each end wall is located close the corner side surface and the recess extends toward a midpoint half way between the corner side surfaces. A position of the secondary support surface close to the corner side surfaces is advantageous for countering transverse cutting forces acting to displace the turning insert in an insert seat. A single recess may extend from close to the respective associated first to close to the respective associated second of the corner side surfaces.

Preferably, the depth of each recess decreases from each end wall in a direction along the associated side of the imaginary triangle at most to a midpoint between the first and the second associated corner side surfaces. Thereby, only enough material is removed from the turning insert to provide the pair of secondary support surfaces so that the turning insert is not unnecessarily weekend by the recess or recesses.

Preferably, secondary support surfaces are distanced from the intersection of the at least one main side surface with both the top surface and the bottom surface. Thereby the secondary support surfaces do not interfere with any of the cutting edges at the top and bottom surface.

A normal to the central plane defines a height direction, wherein, the main top support surface has a distance to the bottom main support surface in the height direction. According to an embodiment, each secondary support surface has a maximal height in the height direction, and the maximal height of the secondary support surfaces are at least 30%, at least 40% or at least 60% of the distance. A large extension in the height direction is beneficial for achieving a large area for the secondary support surfaces. A smaller height is beneficial for maintaining the strength of the turning insert.

Beside facing in different direction, the secondary support surfaces of the pair are preferably identical.

The primary support surfaces of the at least one of the main side surfaces may be separate surfaces or form a single, continuous surface. Preferably, the primary support surfaces are planar. Preferably the primary support surfaces are perpendicular to the central plane. According to embodiments, clearance surfaces are comprised in the primary support surfaces.

According to an embodiment, the primary support surfaces comprises two planar part-surfaces, which each is associated with a respective one of the secondary support surfaces, and, as seen in a normal direction toward the central plane, the part-surfaces form an angle of 90 - 175° between them. Thereby the two primary support surfaces are able to provide support also in the direction of the associated side of the imaginary triangle. In other embodiments, the associated side of the imaginary triangle is located in the plane of the primary support surfaces.

Preferably, each of the part-surfaces extend along the associated side of the imaginary triangle at least a major length of the distance from a respective one of the first and second associated corner side surfaces to a midpoint between the first and the second associated corner side surfaces. The midpoint is located half way between the first and the second associated corner side surfaces. A large length along the main side surface is beneficial for achieving a large area.

According to an embodiment, each of the part-surfaces comprise a surface limited by the top surface, the bottom surface, the associated secondary support surface, and a thereto closest one of the first and second associated corner side surfaces. Thus, the primary support surface covers an area between the side corner surface and a closest one of the secondary support surfaces in the pair. Thereby, the turning insert has main support closest to the corners where cutting forces are most effectively countered.

Preferably, the turning insert is symmetric. For example, 180° symmetrical when rotated around an axis extending in the central plane so that the cutting edges at the bottom surfaces are identical to the cutting edges at the top surface in their respective index position.

According to an embodiment having such 180° symmetry, corner cutting edges are provided at the top surface and at the bottom surface in one of the thee corners only, and the main side surface that is opposite to that corner constitutes the at least one main side surface comprising the primary and the secondary support surfaces.

According to another preferred embodiment, the turning insert has two times 120° symmetry. In addition to a 180° symmetry, the turning insert is symmetrical when rotated 120° around a central axis normal to the central plane. Therein, the turning insert is indexable three times for cutting edges at the top surface, and three times for cutting edges at the bottom surface. Preferably, the cutting edges include corner cutting edges that each is symmetric over a bisector. Furthermore, each of the three main side surfaces comprises the features of the at least one main side surface and these features are configured correspondingly symmetrical such that the turning insert presents the same support surfaces in each of the six index positions.

Preferably, the imaginary triangle is equilateral. According to an embodiment, which has only 180° symmetry around an axis in the central plane forming a bisector through a cutting edge at one of the corners, the imaginary triangle is instead an isosceles triangle.

According to a second aspect of the invention, a turning tool body for holding the turning insert according to the present invention is provided. The turning tool body comprises an insert seat, which insert seat comprises a bottom surface including a main seat support surface, and a side surface. The side surface comprises a primary support surface, and in total one pair of secondary support surfaces facing in opposite directions. Each of the secondary support surfaces extend outward relative a respective one of the primary support surfaces and perpendicular to a plane defined by the central plane of the turning insert when the turning insert is mounted in the insert seat.

Optionally, the turning tool body comprises a shim arranged in the insert seat, wherein the main seat support surface is arranged on the shim.

According to embodiments, the turning insert comprises one set of primary support surfaces for each index position, whereas the insert seat comprises a single set of support surfaces for cooperation with one set of the support surfaces of the turning insert at a time. Preferably, each set of support surfaces of the turning insert includes one of the main top surface and the main bottom surface to cooperate with the main seat support surface, a portion of the other one of the main top surface and the main bottom surface to cooperate with a clamping mechanism, the primary support surfaces and the secondary support surfaces of the at least one main side surface for cooperation with the primary support surfaces and secondary support surfaces of the insert seat.

According to a third aspect of the invention, the turning insert and the turning body together with a clamping mechanism form a turning tool, wherein the turning insert is mounted and clamped in the insert seat of the turning body by the clamping mechanism. The main seat support surface of the insert seat faces the main bottom support surface of the turning insert, the primary support surfaces of the insert seat face a respective one of the primary support surfaces of the at least one of the three main side surfaces of the turning insert, and the pair of secondary support surfaces of the turning tool body pair face a respective one of the secondary support surfaces of the pair of the at least one main side surface of the turning insert. In the clamping position, the clamping mechanism is configured to removably secure the turning insert in the insert seat by pressing the main bottom support surface and the primary support surface of the turning insert against the main support surface and the primary support surface of the insert seat, and by aligning the pair of secondary support surfaces of the turning insert with the respective one of the secondary support surfaces of the pair of the side surface of the insert seat in a standby position, and by allowing the pairs of secondary support surfaces to assume an active position in response to forces acting in parallel with the associated side of the imaginary triangle, wherein at least two mutually facing surfaces of the pairs of secondary support surfaces press against each other.

The cooperating main support surfaces and primary support surfaces are firmly pressed against each other, while the secondary support surfaces provide secondary support in case it is needed. Initially, the turning insert is guided to a desired position and fixed therein by the cooperating main and primary support surfaces, wherein the pairs of secondary support surfaces are in a standby position. In the standby position, optionally, the secondary support surfaces are separated from each other by a small gap, or contact each other without pressing against each other. For example, the gap is up to 0,1 mm.

If during operation, cutting forces act on the turning insert in a direction parallel to the associated side of the imaginary triangle, they may strive to displace the turning insert in the insert seat. This may push the turning insert in the insert seat such that cooperating secondary support surface from the pair of the turning insert and the insert seat assume an active position by engaging and pressing against in each other. Thereby, the secondary support surfaces provide secondary support in case it is need such that the turning insert is able to withstand higher cutting forces and/or cutting forces from more directions than prior art turning inserts.

According to an embodiment, each of the secondary support surfaces of the insert seat are arranged on a common single, or on a respective one sliding block, wherein each sliding block is fixed in an associated slot in the side surface of the insert seat. Thereby production is simplified and set tolerances are easier to achieve. It is also an advantage the sliding block is exchangeable in case support surfaces are worn.

### Brief description of the drawings

In the following, example embodiments will be described in greater detail and with reference to the accompanying drawings, in which:
Fig. 1 is a perspective view of a first embodiment of a double sided, negative turning insert according to the present invention;
Fig. 2 is a top view of the first embodiment of the turning insert;
Fig. 3 is a side view of the first embodiment of the turning insert showing one of the three main side surfaces;
Fig. 4 is a cross sectional view at the central plane of the first embodiment;
Fig. 5 is an exploded view of a first embodiment of a turning tool according to the present invention;
Fig. 6 is a perspective view of the first embodiment of the turning tool as shown in Fig 5, wherein the turning insert according to the first embodiment is mounted in a first embodiment of a turning tool body according to the present invention;
Fig. 7 is a side view of the first embodiment of the turning tool as shown in Fig. 6;
Fig. 8 is a cross sectional view at the central plane of the first embodiment of the turning tool as shown in Fig. 6, wherein Fig. 8a shows an enlarged view of a portion;
Fig. 9 is a view of a cross section that is perpendicular to the central plane and the cross section shown in Fig. 8 of the first embodiment of the turning tool as shown in Fig. 6, wherein Fig. 9a shows an enlarged view of a portion;
Fig. 10 is a perspective view of a second embodiment of a double sided, negative turning insert according to the present invention;
Fig. 11 is a side view of the second embodiment of the turning insert showing one of the three main side surfaces;
Fig. 12 is a cross sectional view at the central plane of the second embodiment;
Fig. 13 is an exploded view of a second embodiment of a turning tool according to the present invention;
Fig. 14 is a perspective view of the second embodiment of the turning tool as shown in Fig 13, wherein the turning insert according to the second embodiment is mounted in a second embodiment of a turning tool body according to the invention;
Fig. 15 is a side view of the second embodiment of the turning tool as shown in Fig. 14; and
Fig. 16 is a cross sectional view at the central plane of the second embodiment of the turning tool as shown in Fig. 14.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

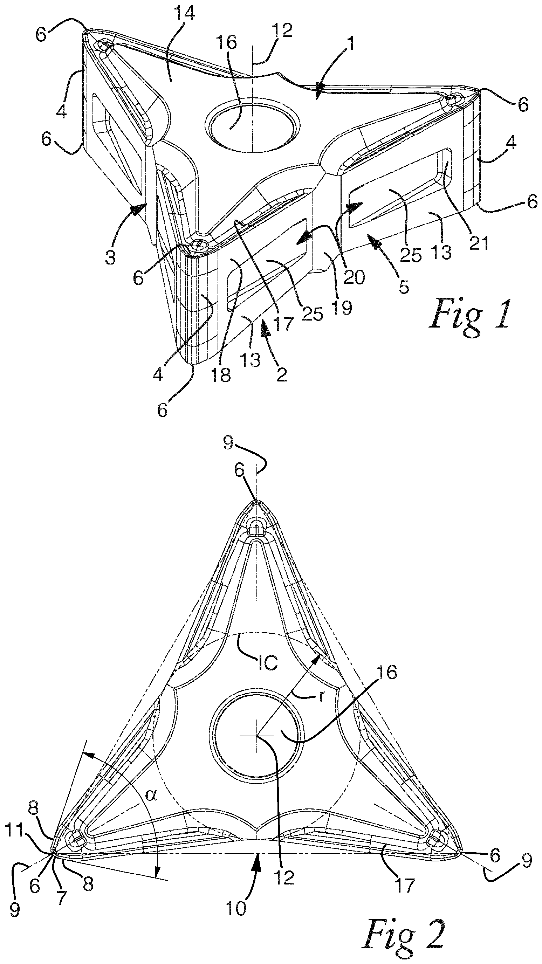

With reference to Figs. 1 - 4, a first embodiment of a double sided, negative turning insert for metal cutting according to the present invention is described. The turning insert comprises a coated body of cemented carbide.

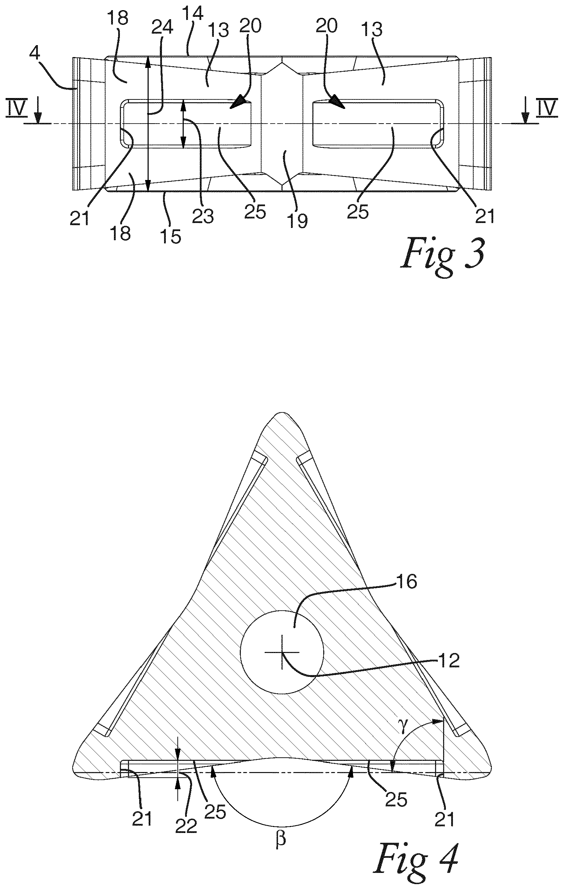

The body comprises a top surface 1, a bottom surface 2 and a peripheral side surface 3 connecting the top surface 1 and the bottom surface 2. The peripheral side surface 3 comprises in total three corner side surfaces 4 and in total three main side surfaces 5. A central plane as indicated in Fig. 3 and shown in Fig. 4 extends half way between the top surface 1 and the bottom surface 2. The body of the turning insert has a central, through hole 16. A central axis 12 is both a central axis of the hole 16 and of the body and, extends in a direction normal to the central plane.

Cutting edges are formed at the intersection between the top surface 1 and the side surface 3, and between the bottom surface 2 and the side surface 3. The cutting edges comprise in total six corner cutting edges 6, one at each corner of the top surface 1 and the bottom surface 2.

The body of the example embodiment has two times 120° symmetry, such that the top surface 1 and the bottom surface 2 are identical to each other, and such that the three main side surfaces 3 also are identical to each other. Furthermore, all six corner cutting edges 6 are identical to each other providing for six index potions of the turning insert. In other words, the body has a 180° symmetry around an axis in the central plane, and a 120° symmetry around the central axis 12. Thus, the turning insert is double-sided.

A first corner cutting edge 6 is symmetrical over a bisector 9, c.f. Fig. 2. The corner cutting edge 6 comprises a convex nose cutting edge 7, and two straight main cutting edges 8 extending therefrom on one respective side thereof. As seen in the top view of Fig. 2, the main cutting edges 8 form a nose angle α of 71-85°. The bisector 9 extends half way between the two main cutting edges 8 and intersects a most distal point 11 of the corner cutting edge 6.

Both the top surface 1 and the bottom surface 2 include portions closest to the cutting edges that form rake surfaces. The rake surfaces are provided with chip breakers in form of grooves 17. The top surface 1 comprises a main top support surface 14 and the bottom surface 2 comprises a main bottom support surface 15, c.f. Fig. 3. The main support surfaces 14, 15 both constitute continuous surfaces which extend from an edge of the central hole 16 to the grooves 17.

As seen in the top view of Fig. 2, each corner side surface 4 is arranged in one respective corner of an imaginary triangle 10 having three sides. The imaginary triangle 10 is equilateral and each corner is arranged at the most distal point 11 of each respective corner cutting edge 6. Each most distal point 11, which also is a corner of the imaginary triangle, has the same distance to a central axis 12. Each main side surface 5 has an extension along an associated one of the three sides of the imaginary triangle 10. Each main side surface 5 extends outward from the associated side of the imaginary triangle 10 closest to the corner side surface, and inward from the associated side at a central portion between the corner side surfaces 4.

In the following, only one of the main side surfaces 5 will be described. Thanks to the symmetry, the other main side surfaces 5 comprise the same features.

The main side surface 5 extends form a first corner side surface 4 to a second corner side surface 4, while a third corner side surface 4 is opposite to the described main side surface 5. The main side surface 5 comprises portions closest to the cutting edges that form clearance surfaces 18. The clearance surfaces 18, as well as a major portion of the main side surface 5 extends perpendicular to the central plane. Also the corner side surfaces 4 extend perpendicular to the central plane. The turning insert can be defined as negative.

The main side surface 5 comprises primary support surfaces 13 in form of two separate part-surfaces. Both part-surfaces are planar, and, as can be seen in Fig. 4, form an angle β of 165 °. Between the two part-surfaces, the main side surface 5 comprises a relief notch 19.

The main side surface 5 comprises two recess 20, wherein each recess 20 extends along the associated side of the imaginary triangle 10 from an end wall close to a corner side surface 4 toward a midpoint half way between the corner side surfaces 4, and specifically to a point close to the relief notch 19.

The main side surface 5 comprises in total one pair of secondary support surfaces 21. In the example embodiment, each of the two secondary support surfaces 21 of the pair is formed by the end wall of one respective recess 20. Both secondary support surfaces 21 are planar, and face in opposite directions and toward each other. As seen in a normal direction toward the central plane, each of the secondary support surfaces 21 form an angle γ with the associated side of the imaginary triangle 10 of 90°. Therein, a normal to the plane of each secondary support surface is parallel to the associated side of the imaginary triangle 10.

A direction in the central plane which direction is perpendicular to the associated side of the imaginary triangle 10 defines a depth direction. The secondary support surfaces 21 extend inward from the at least one main side surface 5 a distance 22 in the depth direction of 1 - 10%, preferably of 5% of the diameter of an inscribed circle IC, c.f. Fig. 4. The inscribed circle IC is the largest circle that, as seen in the top view of Fig. 4, can be contained within the side surface 3.

With reference to Fig. 4, a normal to the central plane defines a height direction. In the example embodiment, the secondary support surfaces 21 have a uniform height along their extension in the depth direction. The height 23 of each secondary support surface 21 in the example embodiment is 37% of a distance 24 from the main top support surface 14 to the bottom main support surface 15 in the height direction. The secondary support surfaces 21 do not extend up to or down to the intersection of the main side surface 5 with the top surface 1 and the bottom surface 2. Similarly, the recess 20 has an opening in the main side surface 5. The opening is defined by upper and lower edges, which are distanced from the intersection of the main side surface 5 with the top surface 1 and the bottom surface 2. Thus, the secondary support surfaces 21 are distanced from the cutting edges.

In the depth direction the recess 20 is limited by a bottom in form of a base surface 25. The depth of each recess 20 decreases from each end wall in a direction along the associated side of the imaginary triangle 10 toward a midpoint half way between the first and the second associated corner side surfaces 4, and in this case a short distance from the relief notch 19. In the example embodiment, as seen in cross sections parallel to the central plane, c.f. Fig. 4, the base surface is parallel to the side of the imaginary triangle 10. The decreasing depth of the recess 20 is achieved by the angled part-surfaces that form the primary support surfaces 13, wherein the base surface 25 intersects the primary support surface 13 in an intersection close to the relief notch 19.

Each recess 20 is surrounded by a respective one of the part-surfaces constituting the primary support surface 13. The opening is limited by the upper and lower edges, a line formed by the intersection of the secondary support surfaces 21 with the part-surface at an end closest to the side corner surface 4, and a line formed by the intersection between the base surface 25 and the part-surface at an end closest to the relief notch 19. Each part-surface has an extension in the direction of the associated side of the imaginary triangle 10, which is at least a major length of the distance from the corner side surface 4 to a midpoint half way between the first and the second associated corner side surfaces 4. Each part surface also comprises a surface limited by the top surface 1, the bottom surface 2, the associated secondary support surface 21, and the corner side surfaces 4.

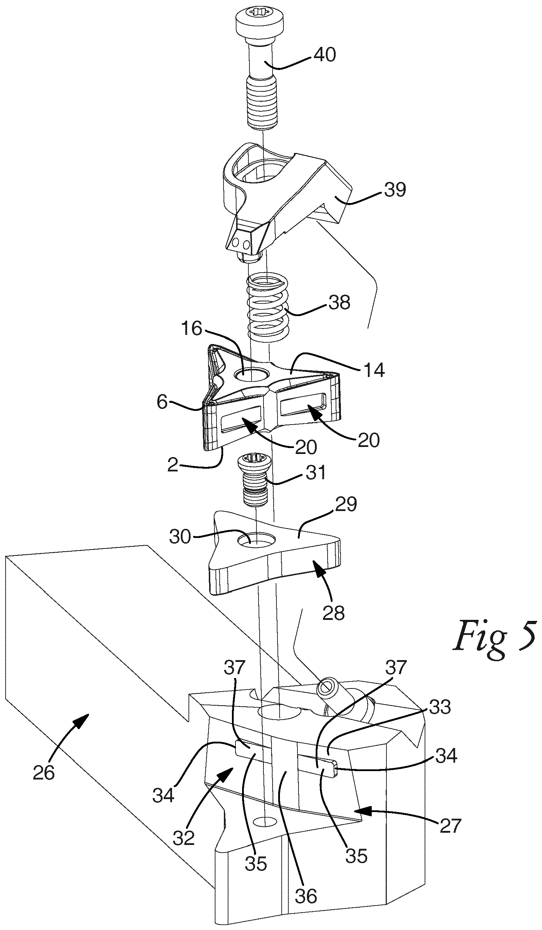

With reference to Figs. 5 - 9, a first embodiment of a turning tool with mounted turning insert according to the first embodiment is shown. Specifically, a first embodiment of a turning tool body 26 is included in the described turning tool.

As can be seen in the exploded view of Fig. 5, the turning tool body 26 comprises an insert seat 27, which insert seat comprises a shim 28. A bottom surface including a main seat support surface 29 is located on a top side of the shim 28. The shim 28 comprises a central, through hole 30 and is attached to the turning tool body 26 by means of a screw 31 extending through the hole 30.

The insert seat 27 furthermore comprises a side surface 32. The side surface 32 comprises two protruding wedge elements 35, which each extends along the associated side of the imaginary triangle 10 of the turning insert mounted in the insert seat 27. Therein, each wedge element 35 protrudes the most from the side surface 32 by an end surface at an end closest to a corner side surface 4 of mounted the turning insert. Between the two wedge elements 35, at the midpoint, the side surface 32 comprises a relief bulge 36. Each wedge element 35 comprises an inclined surface 37, which extends from the end surface and which, at an end closest to a midpoint half way between the corner side surfaces 4 of the mounted turning insert, runs out into the side surface 32 at an intersection thereof with the relief bulge 36.

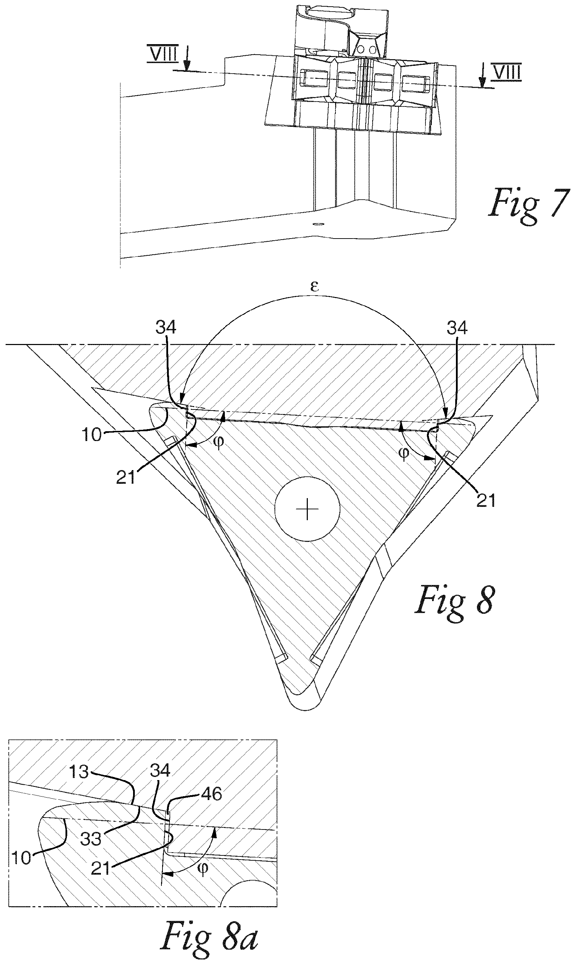

The side surface 32 includes primary support surfaces 33 in form of two separate part-surfaces. Each wedge element 35 is surrounded by a respective one of the two part-surfaces on three sides, and the relief bulge on the fourth side. Both part-surfaces are planar, and, as can be seen in Fig. 8, form an angle ε of 165° between them. In the example embodiment, the angle ε is equal to the angle β formed by the part-surfaces of the turning insert.

The side surface 32 comprises in total one pair of secondary support surfaces 34. In the example embodiment, the two secondary support surfaces 34 are located on an end surface of a respective one of the of the wedge elements 35, so that they extend outward relative a respective part-surface. Both secondary support surfaces 34 are planar, and face in opposite directions and face away from each other. As seen in a normal direction toward the central plane of a turning insert mounted in the insert seat 27, each of the secondary support surfaces 34 form an angle ϕ with the associated side of the imaginary triangle 10 of 90°. In the example embodiment, the angle ϕ is equal to the angle γ of the secondary support surfaces 21 of the turning insert. Therein, a normal to the plane of each secondary support surface 34 is parallel to the associated side of the imaginary triangle 10.

In Fig. 5, furthermore a clamping mechanism is shown, wherein the clamping mechanism comprises a spring element 38, a clamp 39 and a tightening screw 40.

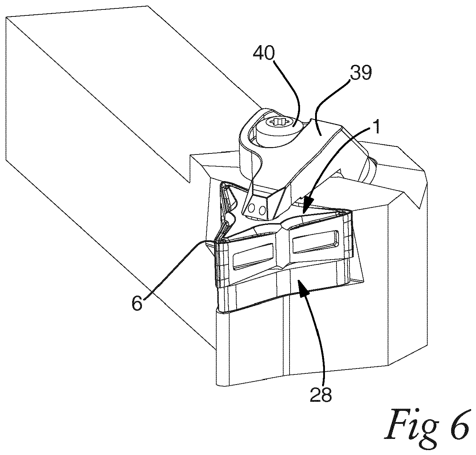

A first embodiment of a turning tool comprising the turning tool body 26 according to the first embodiment, the turning insert according to the first embodiment, and the clamping mechanism, is shown in Figs. 6 - 9, wherein the turning insert is removably secured in the insert seat 27 of the turning tool body 27 by means of the clamping mechanism.

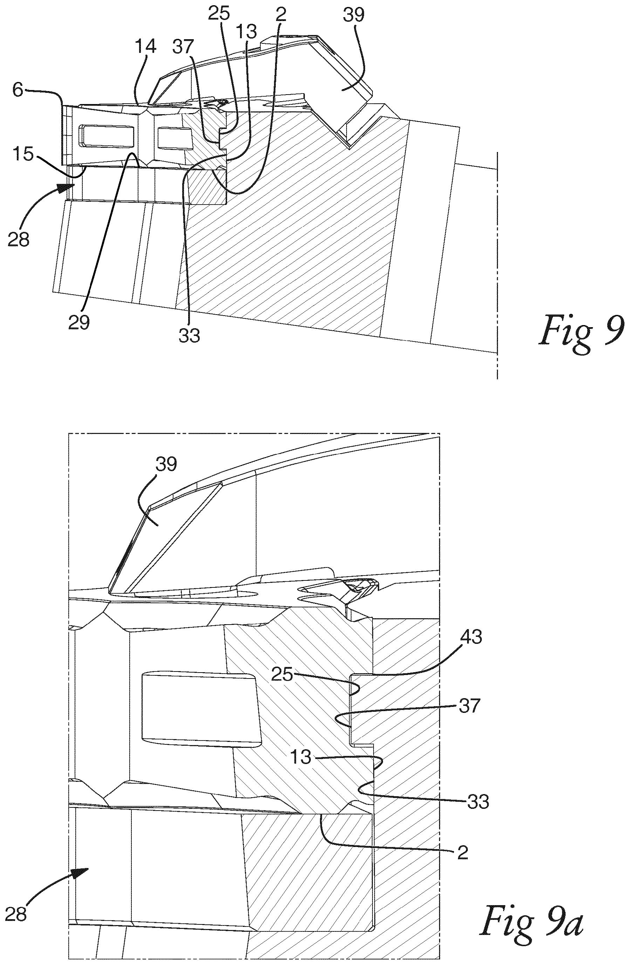

With reference to Fig. 9, the main seat support surface 29 of the insert seat 27 faces the main bottom support surface 15 of the turning insert. The part-surfaces constituting the primary support surfaces 33 of the insert seat 27 face a respective one of the part-surfaces constituting the primary support surfaces 13 of the at least one of the three main side surfaces 5 of the turning insert. The pair of secondary support surfaces 34 of the turning tool body pair face a respective one of the secondary support surfaces 21 of the pair of the at least one main side surface 5 of the turning insert. In order to clamp the turning insert, the tightening screw 40 of the clamping mechanism is tightened, whereby the clamp 39 engages the main top support surface 14 and presses the turning insert toward the shim 28 and toward the side surface 32. Thereby, the main bottom support surface 15 of the turning insert is firmly pressed against the main seat support surface 29 of the insert seat, and the part-surfaces constituting primary support surfaces 13 of the turning insert are firmly pressed against the part-surfaces constituting the primary support surfaces 33 of the insert seat 27. The pair of secondary support surfaces 21 of the turning insert are aligned with the respective one of the secondary support surfaces 34 of the pair of the side surface 32 of the insert seat 27. Thus one secondary support surface from each pair cooperate.

The secondary support surfaces 34 of the insert seat 27 extend a distance outward from the side surface 32 in a direction corresponding to the depth direction of turning insert mounted in the insert seat 27, wherein the distance is shorter than the depth of a cooperating one of the secondary support surfaces 21 of the turning insert. The secondary support surfaces 34 of the insert seat 27 extend a distance in the height direction which is smaller than the maximal height of the secondary support surface 21 of the turning insert. Thereby a clearance 43 is created around the wedge elements 35 in their respective recess 20, c.f. Fig. 9a. The relief bulge 36 is received in the relief notch 19.

In the clamping position, initially, the secondary support surfaces 21, 34 are in a standby position, wherein there is a small gap 46 of 0,05 mm between respective two aligned cooperating secondary support surfaces 21, 34.

Opposite the main side surface 5, which is cooperating with the side surface 32 of the insert seat 27 in the shown index position of the turning insert, a corner cutting edge 6 is presented at the top surface 1. The corner cutting edge 6 may be used for cutting a rotating metal workpiece, wherein the corner cutting edge 6 may be fed in both directions across the bisector 9.

If during operation cutting forces, for example forces acting transverse across the bisector in the direction of the imaginary side of the triangle 10, strive to displace the turning insert in the insert seat 27, two of the aligned cooperating secondary support surfaces 21, 34 assume an active position, wherein they contact and press against each other. Thereby additional support is provided so that any movement of the turning insert is stopped. Since the distance until contact of the secondary support surfaces 21, 34, is very small, the turning insert essentially remains in the clamping position. Of the surfaces of the wedge element 35, only the secondary support surface 34 has contact with a surface of the turning insert, i.e. the secondary support surface 21 of the turning insert.

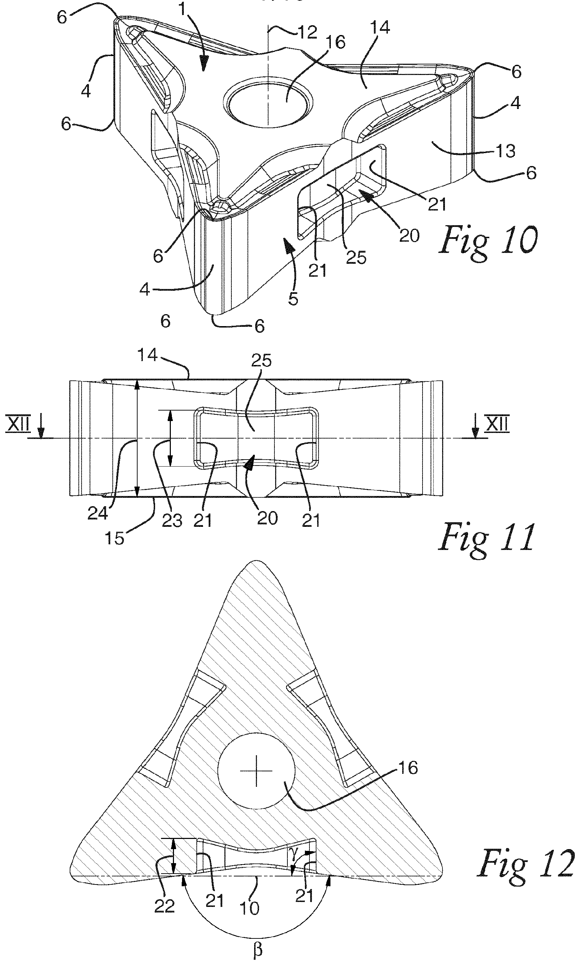

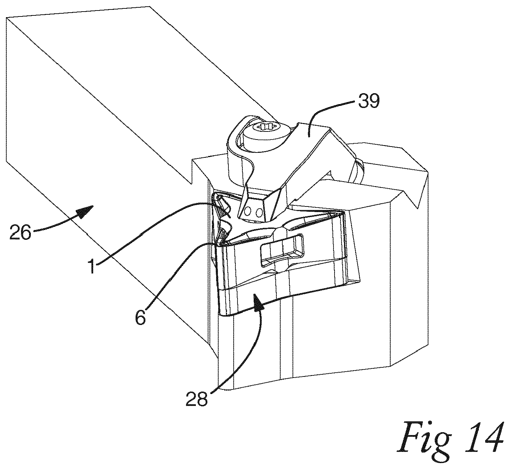

A second embodiment of a turning tool comprising a turning tool body 26 according to a second embodiment, a turning insert according to a second embodiment, and the clamping mechanism, is shown in Figs. 10- 16, wherein the turning insert is removably secured in the insert seat 27 of the turning tool body 27 by means of the clamping mechanism. The devices have many features in common with corresponding devices of the first embodiment, why mainly only differencing features are described. Figs. 10 - 16 show a second embodiment of a double sided, negative turning insert for metal cutting according to the present invention.

The turning insert according to the second embodiment is also a double sided, negative turning insert for metal cutting, and has the same symmetry as the turning insert of the first embodiment, so that in the following, one of the main side surfaces 5 will be described, the other main side surfaces 5 comprise the same features.

The turning insert according to the second embodiment differs from the turning insert according to the first embodiment described above, mainly in that the main side surface 5 comprises a single recess 20 instead of two recesses. The single recess 20 extends along the associated side of the imaginary triangle 10 from an end wall close to a first corner side surface 4 to an end wall close to a second corner side surface 4. The secondary support surfaces 21 of the in total one pair of the turning insert are formed by one respective end wall of the single recess 20.

The depth of the recess 20 is defined by a bottom in form of a base surface 25. The depth of the single recess 20 decreases from each end wall in a direction along the associated side of the imaginary triangle 10 to a midpoint half way between the first and the second associated corner side surfaces 4. In the example embodiment, as seen in cross sections parallel to the central plane and in a direction along the associated side of the imaginary triangle 10, the base surface 25 extends outward from the primary support surfaces13, toward a most shallow point at the midpoint. The relief notch 19 is split in two by the single recess 20.

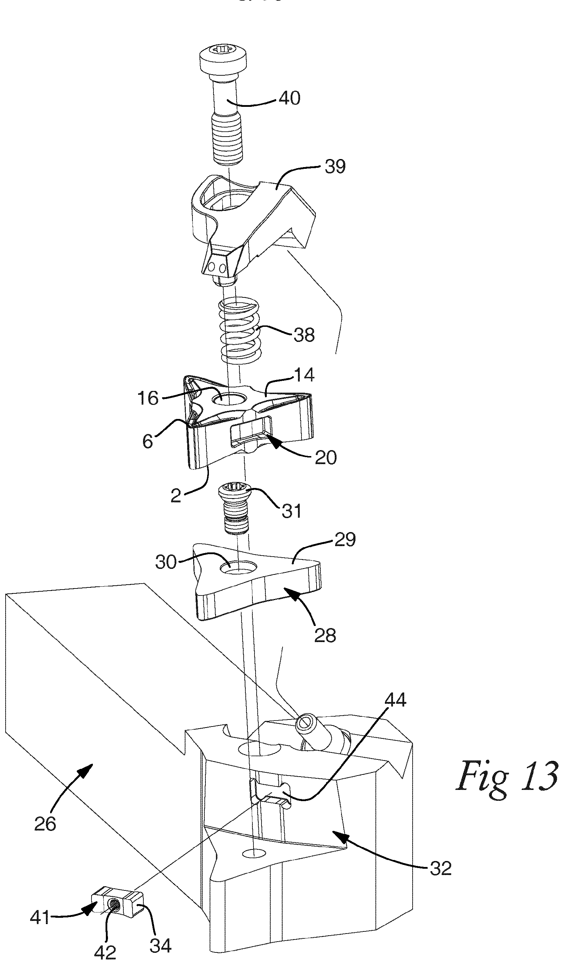

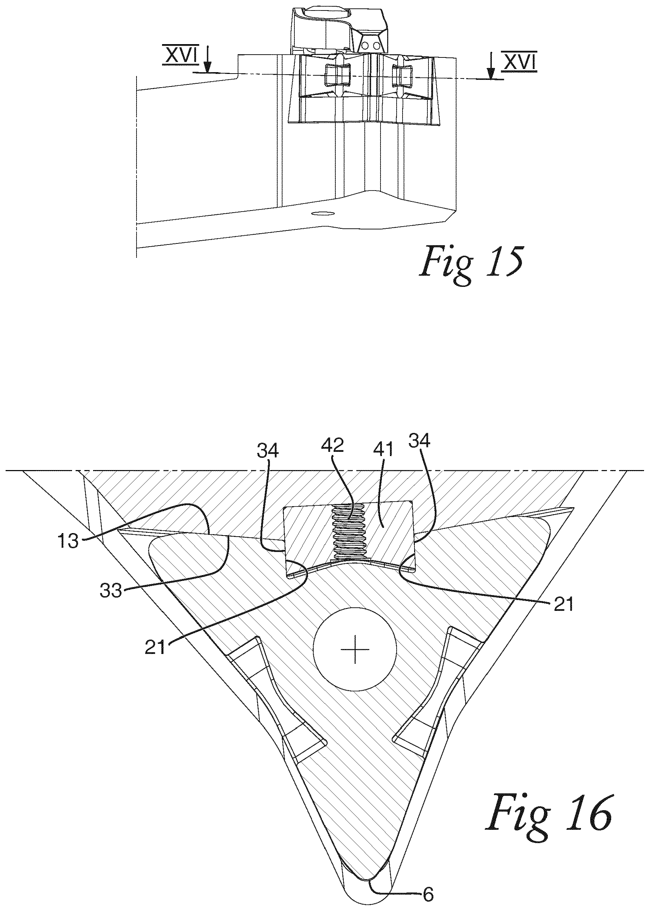

The turning tool body according to the second embodiment comprises a slot 44 in the insert seat surface 32. A sliding block 41 is positioned in the slot 44. The sliding block 41 comprises a central, through hole 42 and is fixed in the slot 44 by means of a screw 31 extending through the hole 42, c.f. Figs 13 and 16.

The two secondary support surfaces 34 of the in total one pair of the insert seat are arranged on the sliding block 41. The two secondary support surfaces 34 according to the second embodiment have the same size and extension as the secondary support surfaces 34 of the first embodiment described above.

The turning insert, the turning tool holder and the clamping mechanism are assembled to form the turning tool according to the second embodiment, wherein all described surfaces cooperate correspondingly.

## Claims

1. A double sided, negative turning insert for metal cutting, which comprises a body a body comprising
- a top surface (1) comprising a main top support surface (14),
- a bottom surface (2) comprising a main bottom support surface (15),
- a peripheral side surface (3) connecting the top surface (1) and the bottom surface (2),
- cutting edges, which are formed at the intersection between the top surface and the side surface, and between the bottom surface and the side surface, and
- a central plane between the top surface and the bottom surface
wherein
- the peripheral side surface comprises in total three corner side surfaces (4), which, as seen in a top view, each are arranged in one respective corner of an imaginary triangle (10) having three sides,
- the peripheral side surface comprises in total three main side surfaces (5), each extending from a respective associated first to a respective associated second of the corner side surfaces (4) along a respective associated one of the three sides of the imaginary triangle (10), and wherein
- at least one of the three main side surfaces (5) comprises primary support surfaces (13),
**characterized in that**
- the at least one main side surface (5) further comprises in total one pair of secondary support surfaces (21) facing toward opposite directions, wherein each of the secondary support surfaces (21) extend inward relative a respective one of the primary support surfaces (13), and wherein each of the secondary support surfaces (21) extend perpendicular to the central plane.

2. The turning insert as claimed in claim 1, wherein each of the secondary support surfaces (21) of the pair is planar.

3. The turning insert as claimed in any preceding claim, wherein each of the secondary support surfaces (21) of the pair faces in a direction toward each other.

4. The turning insert as claimed in claims 2 and 3, wherein, as seen in a normal direction toward the central plane, each of the secondary support surfaces (21) form an angle γ with the associated side of the imaginary triangle of 45 - 90°, preferably of 90°.

5. The turning insert as claimed in any preceding claim, wherein the secondary support surfaces (21) are distanced from the intersection of the at least one main side surface with both the top surface (1) and the bottom surface (2).

6. The turning insert as claimed in claim 5, wherein a normal to the central plane defines a height direction, wherein
- the main top support surface (14) has a distance (24) to the bottom main support surface (15) in the height direction,
- each secondary support surface (21) has a maximal height (23) in the height direction, and
- the maximal height of the secondary support surfaces (21) are at least 30%, at least 40% or at least 60% of the distance.

7. The turning insert as claimed in any preceding claim, wherein a direction in the central plane which direction is perpendicular to the associated side of the imaginary triangle defines a depth direction,
- the secondary support surfaces (21) extend inward from the at least one main side surface (5) a distance in the depth direction of 1 - 10%, preferably of 5%, of the diameter of an inscribed circle.

8. The turning insert as claimed in any preceding claim, wherein the secondary support surfaces (21) each form a respective end wall of a recess (20), wherein the end walls are arranged in a common, single recess (20), or in one respective recess (20).

9. The turning insert as claimed in claims 3, 7 and 8, wherein the depth of each recess (20) decreases from each end wall in a direction along the associated side of the imaginary triangle (10) at most to a midpoint half way between the first and the second associated corner side surfaces (4).

10. The turning insert as claimed in any preceding claim, wherein
- the primary support surfaces (13) comprises two planar part-surfaces, which each is associated with a respective one of the secondary support surfaces (21), and,
- as seen in a normal direction toward the central plane, the part-surfaces form an angle of 90 - 175° between them.

11. The turning insert as claimed in claim 10, wherein each of the part-surfaces extend along the associated side of the imaginary triangle (10) at least a major length of the distance from a respective one of the first and second associated corner side surfaces (4) to a midpoint half way between the first and the second associated corner side surfaces (4).

12. The turning insert as claimed in claim 10 or 11, wherein each of the part-surfaces comprise a surface limited by the top surface (1), the bottom surface (2), the associated secondary support surface (21), and a thereto closest one of the first and second associated corner side surfaces (4).

13. The turning insert as claimed in any preceding claim, wherein
- the imaginary triangle (10) is equilateral,
- each of the three main side surfaces (5) have the features of the at least one main side surface (5),
- the turning insert is six times indexable.

14. A turning tool body (26) for holding the turning insert as claimed in any claim 1 - 13, wherein the tool body comprises an insert seat, which insert seat comprises
- a bottom surface including a main seat support surface (29),
- a side surface (32) including
- a primary support surface (29), and
- in total one pair of secondary support surfaces (34) facing in opposite directions, wherein each of the secondary support surfaces (34) extend outward relative a respective one of the primary support surfaces (29), and wherein each of the secondary support surfaces (34) extend perpendicular to a plane defined by the central plane of the turning insert when the turning insert is mounted in the insert seat (27).

15. A turning tool comprising the turning insert as claimed in any claim 1 - 13, a turning tool body (26) as claimed in claim 14, and clamping mechanism, wherein
- the main seat support surface (27) faces the main bottom support surface (15) of the turning insert,
- the primary support surfaces (33) of the insert seat (27) face a respective one of the primary support surfaces (13) of the at least one of the three main side surfaces (5) of the turning insert, and
- the secondary support surfaces (34) of the tool body pair face a respective one of the secondary support surfaces (21) of the pair of the at least one main side surface (5) of the turning insert,
wherein, the clamping mechanism is configured to removably secure the turning insert in the insert seat (27) by
- pressing the main bottom support surface (15) and the primary support surfaces (13) of the turning insert against the main seat support surface (29) and the primary support surface (33) of the insert seat (27, respectively, and by
- aligning the pair of secondary support surfaces (21) of the turning insert with the respective one of the secondary support surfaces (34) of the pair of the insert seat (27) in a standby position, and by
- allowing the pairs of secondary support surfaces (21, 34) to assume an active position in response to forces acting in parallel with the associated side of the imaginary triangle (10), wherein at least two mutually facing surfaces of the pairs of secondary support surfaces (21, 34) press against each other.

16. The turning tool according to claim 15, wherein each of the secondary support surfaces (34) of the insert seat (27) are arranged on a common single, or on one respective sliding block (41), wherein each sliding block (41) is fixed in an associated slot (44) in the side surface (32) of the insert seat (27).
